# EUROPEAN PATENT SPECIFICATION

(11) **EP 3 203 110 B1**
(45) Date of publication and mention of the grant of the patent: **26.09.2018**
(21) Application number: 16153928.3
(22) Date of filing: 02.02.2016
(51) Int. Cl.: F16F 15/32

(54) **SELF-ADHESIVE BALANCING WEIGHT FOR A VEHICLE WHEEL**
SELBSTHAFTENDES AUSWUCHTGEWICHT FÜR EIN FAHRZEUGRAD
POIDS D'ÉQUILIBRAGE AUTO-ADHÉSIF POUR UNE ROUE DE VÉHICULE

(43) Date of publication of application: 09.08.2017
(73) Proprietor: WEGMANN automotive GmbH & Co. KG, 97209 Veitshöchheim (DE)
(72) Inventor: SCHWENOLD, Hubert, 72474 Winterlingen-Harthausen (DE)
(74) Representative: Lohr, Jöstingmeier & Partner

(56) References cited:
- DE-A1-102005 009 605
- DE-A1-102010 008 657

## Description

### Field of the invention

The invention relates to a self-adhesive balancing weight, which may be attached to the rim of a wheel of a vehicle and specifically to a wheel of a truck for balancing the wheel.

### Description of the related art

Self-adhesive balancing weights are held by an adhesive tape to the surface of a rim of wheel. The contact surface of self-adhesive balancing weights generally is formed so as to accurately fit to the counter surface of the wheel rim holding the weight to provide as much contact surface and thereby adhesive surface area as possible in order to ensure safe fixation. The adhesive tape may have a foam layer to compensate for mechanical tolerances.

WO 99/00609 discloses self-adhesive balancing weights the contact surfaces of which are exactly complementary to the shape of the counter-surface of the respective wheel rim so that they could not be used with wheel rims of different shape.

US 2007/0108834 A1 discloses a balancing weight body filled with mass material particles.

FR 1.309.852 discloses a balancing weight with a curved attachment section.

There is a large number of different rim geometries in the market. Furthermore, there are significant mechanical tolerances in the rims which may be in an order of 1 mm.

Self-adhesive balancing weights usually have a planar back surface which is designed to adhere to an at least essentially planar surface which is curved only around the rotational axis of the wheel. Accordingly, the self-adhesive balancing weights have to be bent only in one axis. This bending may be performed sufficiently precise by an assembly machine, which presses the balancing weights to the rim or by manually pre-bending the weights before application. While these methods provide good results when applying balancing weights to the rims of passenger cars, they are not applicable to trucks, as the larger truck weights are non-bendable cast parts. Strain on truck balancing weights is generally higher than on passenger car balancing weights, as trucks have significantly longer maintenance intervals than passenger cars and therefore, the balancing weights have to be held reliably at the wheel for a much longer time. Furthermore, due to the larger tires of trucks, the masses of truck balancing weights are often much higher than these of passenger cars, which further require higher holding forces.

DE 10 2010 008657 A1 discloses a ceramic balancing weight having an arc-shaped bottom side to adapt to the curvature of the rim.

DE 10 2005 009605 A1 discloses a plurality of balancing weights attached to an adhesive tape, which may be bent to a curve without deforming individual balancing weights.

### Summary of the invention

The problem to be solved by the invention is to provide self-adhesive balancing weights which provide a higher and longer lasting adhesive force. Furthermore, the balancing weights should be applicable to a broad variety of rim geometries and sizes.

Solutions of the problem are described in the independent claims. The dependent claims relate to further improvements of the invention.

In a preferred embodiment, a balancing weight for balancing a wheel of a vehicle, and preferably of a truck or a bus, has roughly the shape of an arch segment. It has a bottom surface, which may be used to hold the balancing weight to a rim, preferably by means of an adhesive tape. Opposed to the bottom surface is a top surface, which further may bear at least one visible marking, which may indicate the size and/or the mass and/or the manufacturer of the balancing weight. The balancing weight further has two opposing long sides between the top surface and the bottom surface and two opposing shorts sides between the top surface and the bottom surface. The short sides have enclose an angle of less than 90° with the bottom surface and an angle of more than 90° with the top surface. The bottom surface has a convex shape extending between the short sides of the balancing weight. It is preferred, if the long sides and the top surface have a planar shape. It is further preferred, if the edges and corners of the balancing weight are rounded or chamfered.

It is further preferred, if the short sides are convex-shaped between one long side and the other long side. This means that the short sides are curved in a direction between the long sides and are straight in a direction from the top surface to the bottom surface.

In a further embodiment, the long sides are under an angle of less than 90° to the bottom surface and under an angle of more than 90° to the top surface.

This specific form of balancing weights allows to mount the balancing weights to surfaces of a rim which are oriented radially or axially or in any angle in-between. As the balancing weights basically are arch segments, which is caused by the slanted short sides having an angle of less than 90° to the bottom surface and an angle of more than 90° to the top surface, together with the convex bottom surface, these balancing weights can be chained or mounted close to each other at a curved surface which is oriented in an axial direction (parallel to the axis of rotation). Due to the convex short sides, the neighboring balancing weights may be tilted against each other and therefore may easily be mounted to surfaces which are oriented radially to the rotation axis. As the preferred embodiments comprise both of the previously mentioned features, the balancing weights may also be mounted any surface having an angle between parallel to the rotation axis and radial to the rotation axis of the wheel.

Basically, the bottom surface may have two different shapes. In the first embodiment, the bottom surface is convex forming a curve extending between the two short sides and being straight in a direction between the long sides. In a further preferred embodiment, the bottom surface has a double curvature, such that a further curve extends between the both long sides. This specific double-curved bottom surface results in a point having a maximum elevation, which is at the center of the balancing weight defined between the long sides and the short sides. If the balancing weight is attached to a rim, the rim surface being either oriented radially or axially, in most cases the center of the balancing weight's bottom surface preferably is closest to the rim surface, and therefore asserts the highest pressure to the adhesive tape. Having the point of highest pressure at the center of the balancing weight leads to superior adhesion of the balancing weight to the rim.

It is preferred, if the balancing weights disclosed herein comprise at least one of lead, zinc, tin, iron, stainless steel, plastic or a combination thereof.

A further embodiment relates to a method for applying a balancing weight as previously disclosed to the rim of the wheel by selecting appropriate location at the rim of the wheel and pressing the balancing weight to the selected location of the rim of the wheel. It is preferred to remove a liner of an adhesive tape before attaching the balancing weight to the rim of the wheel.

### Description of Drawings

In the following the invention will be described by way of example, without limitation of the general inventive concept, on examples of embodiment with reference to the drawings.
Figure 1 shows a plurality of balancing weights attached to a rim.
Figure 2 shows a side view of balancing weights attached to a rim.
Figure 3 shows a perspective view of a balancing weight.
Figure 4 shows a top view of a balancing weight.
Figure 5 shows a side view at a long side.
Figure 6 shows a side view on a short side of a balancing weight.
Figure 7 shows another embodiment of the balancing weight.
Figure 8 shows details of the angles of the short side.
Figure 9 shows details of the angles of the long side.
Figure 10 shows a chain of balancing weights on a surface in radial direction.
Figure 11 shows balancing weights in an axial plane.
Figure 12 shows two balancing weights mounted under an angle.
Figure 13 shows a sectional view of the adhesive tape of fig. 12.
Figure 14 shows two balancing weights of prior art mounted under an angle.
Figure 15 shows a sectional view of the adhesive tape of fig. 14.

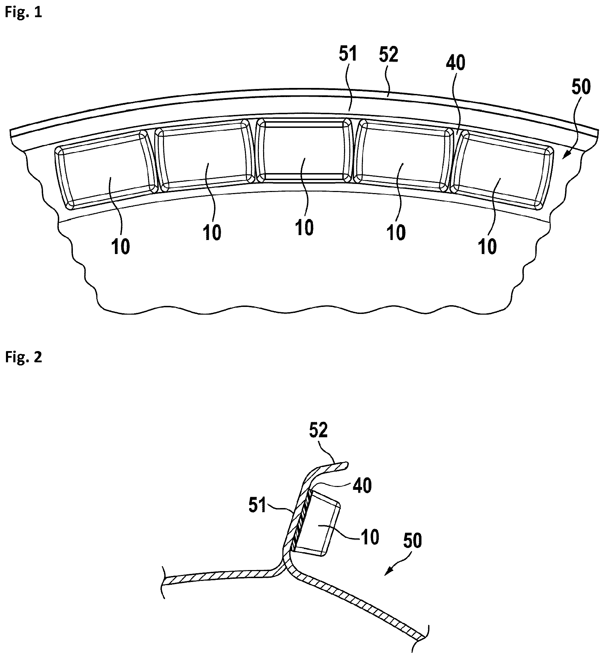

In Figure 1, a plurality of balancing weights are shown, which are attached to A rim of a wheel. The rim of the wheel 50 has a rim flange 51 and an edge 52 thereof. Here, five balancing weights 10 are attached by means of an adhesive tape 40 to the rim 50.

In Figure 2, a side view of a section of a rim is shown with balancing weights attached thereto. A balancing weight 10 is held via adhesive tape 40 to the rim 50 of a wheel.

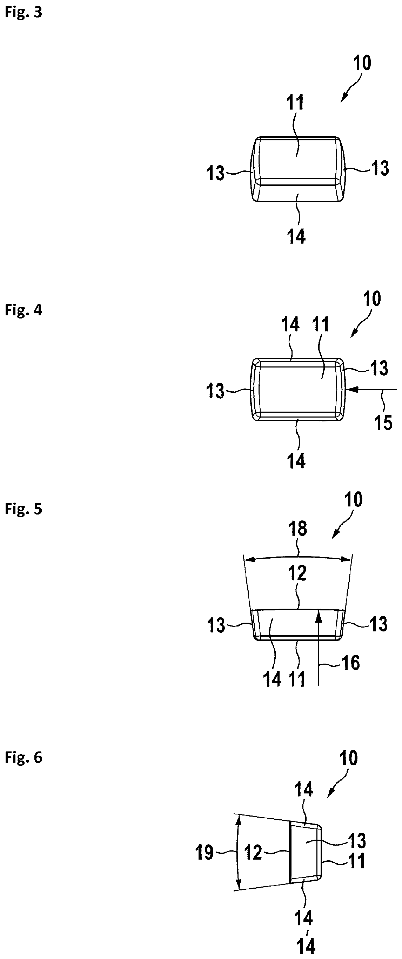

In Figure 3, a perspective view of a balancing weight 10 is shown. It has a top surface 11, two short sides 13 and a long side 14 at the front. The opposing long side 14 at the rear and the bottom surface 12 cannot be seen in this figure.

In Figure 4, a top view of a balancing weight 10 is shown. At the top is the top surface 11. At the left and the right, where are short sides 13, and in-between the long sides 14. Preferably, the short sides 13 are convex-shaped between the long sides 14 with a radius 15.

In Figure 5, a side view on a long side 14 of balancing weight 10 is shown. The bottom surface 12 preferably is convex with an arch extending between the short sides 13 and a radius 16. A preferred value for such a radius 16 is between 200 and 400 mm, preferably around 300 mm. The short sides 13 preferably are under an angle 18, which further is preferred to be in a range of 5° to 25°, and preferably between 13° and 17°.

In Figure 6, a side view on a short side 13 of a balancing weight 10 is shown. In this view, the bottom surface 12 extends straight between the long sides 14, as the curvature extends between the short sides 13. It is preferred, if the long sides 14 are under an angle 19, which further is preferred to be in a range of 5° to 25°, and preferably between 13° and 17°.

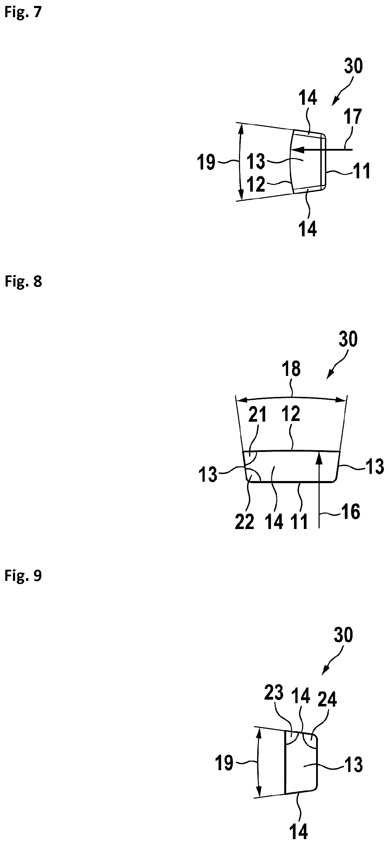

In Figure 7, another preferred embodiment of the balancing weight 30 is shown. Here, the bottom surface is double-curved and has a second curve extending between the long sides 14, resulting in a second radius 17. A preferred value for such a radius 17 is between 200 and 400 mm, preferably around 300 mm.

In Figure 8, details of the angles of the short sides of a balancing weight 30 are shown. The short sides 13 are under an angle 21 of less than 90° to the bottom surface 12, and under an angle 22 of more than 90° to the top surface 11. Basically the same may apply to all embodiments balancing weights mentioned herein.

In Figure 9, details of the angles of the long sides of a balancing weight 30 are shown. The long sides 14 are under an angle 23 of less than 90° to the bottom surface 12, and under an angle 24 of more than 90° to the top surface 11. Basically the same may apply to all embodiments balancing weights mentioned herein.

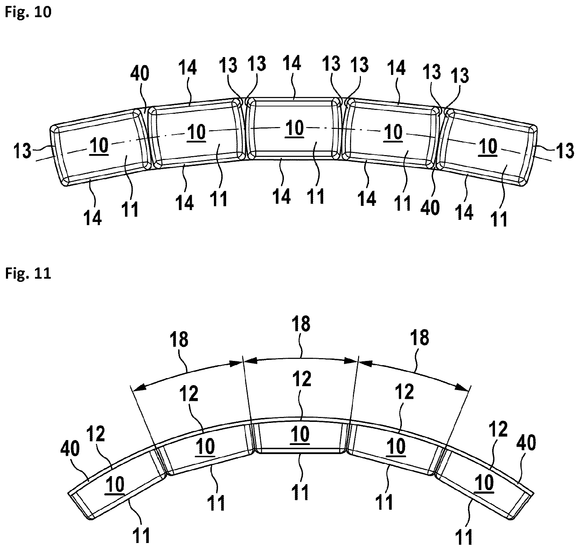

In Figure 10, a chain of balancing weights on a surface in radial direction is shown. Due to the convex-curved short sides 13, the balancing weights can easily be tilted against each other. This way of tilting reduces the tension stress to the adhesive tape in the gap between the balancing weights. If the balancing weights would not have the convex short sides, the extension of the adhesive tape in the gap would be significantly higher. This would lead to a decrease in thickness and elasticity of the balancing weight, which would further lead to a reduced adhesive force in the region where the gap between the balancing weights opens. Therefore, due to the convex-curved short sides, the distribution of adhesive force and the long-time stability of the adhesive force and be increased.

In Figure 11, a chain of balancing weights 10 is mounted on a axially oriented plane. Due to the short sides forming angles 18 between the short sides, the balancing weights can be mounted without forming a gap close to the adhesive tape and therefore avoiding to stretch the adhesive tape. Therefore, the disadvantages of a stretched adhesive tape as mentioned above can be avoided. In this Figure, the arch-segmented shape and the arrangement of the plurality of the arch-segmented shape balancing weights is clearly shown.

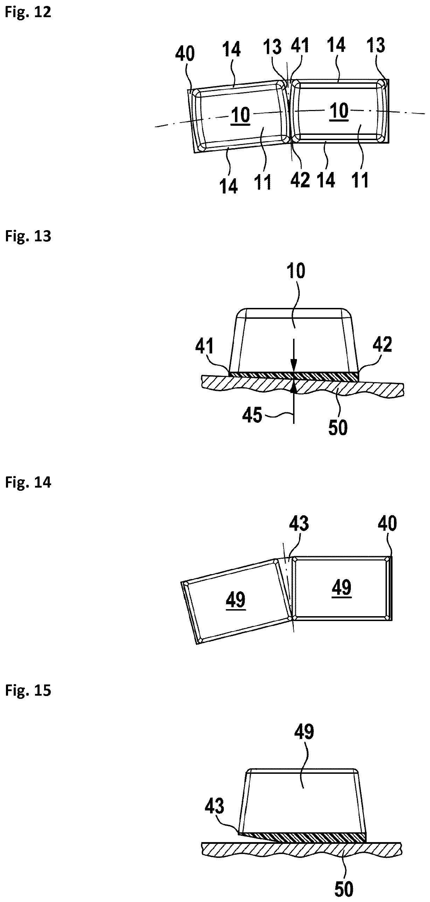

Figure 12 shows two balancing weights according to any of the previous embodiments mounted under an angle adapted to the radius of a rim as shown in fig. 10. Here, the adhesive tape is slightly compressed in a region 42 oriented inwards to the radius and slightly extended in a region 41 oriented outwards to the radius.

Figure 13 shows a sectional view through the adhesive tape between the balancing weights, which has a slightly lower thickness in the stretching region 41 compared to the normal thickness region at the center 45 having normal thickness. In the compression region 42 the thickness is slightly higher than at the center 45. As can be seen, the deviations to standard thickness are comparatively small. Figure 14 shows two balancing weights known from prior art, mounted under an angle adapted to the radius of a rim as shown in fig. 10. Here, the adhesive tape is extremely extended in a region 43 oriented outwards to the radius.

Figure 15 shows a sectional view through the adhesive tape between the balancing weights, which has a significantly lower thickness in the extreme stretching region 43 compared to the normal thickness region. As can be seen, the deviations to standard thickness are comparatively large, which may lead to a loss of adhesion in the extreme stretching region 43. Furthermore, with time debris may penetrate between the rim and the tape, which may lead to a loss of the weight.

### List of reference numerals

- 10: balancing weight
- 11: top surface
- 12: bottom surface
- 13: short side
- 14: long side
- 15: short side radius
- 16: bottom side radius in long side direction
- 17: bottom side radius in short side direction
- 18: angle between short sides
- 19: angle between long sides
- 21: angle between short side and bottom surface
- 22: angle between short side and top surface
- 23: angle between long side and bottom surface
- 24: angle between long side and top surface
- 30: balancing weight
- 40: adhesive tape
- 41: stretching region
- 42: compression region
- 43: extreme stretching region
- 45: normal thickness region
- 50: wheel rim
- 51: wheel horn
- 52: edge

## Claims

1. A self-adhesive balancing weight (10) for balancing a wheel of a vehicle comprising
- a bottom surface (12) to be attached to the rim of the wheel, opposed thereto a top surface (11),
- two long sides (14) opposing each other, between the top surface (11) and the bottom surface (12),
- two short sides (13) opposing each other, between the long sides (14) and between the top surface (11) and the bottom surface (12),
**characterized in that**
the balancing weight (10) is an arch segment having a convex bottom surface (12) extending between the short sides (13), and
the short sides (13) having an angle of less than 90° to the bottom surface (12), and an angle of more than 90° to the top surface (11), and
the short sides (13) are convex-shaped from one long side (14) to the other long side (14).

2. Balancing weight according to claim 1,
**characterized in that**
the long sides (14) are under an angle of less than 90° to the bottom surface (12) and under an angle of more than 90° to the top surface (11).

3. Balancing weight according to claim 1 or 2,
**characterized in that**
the bottom surface (12) is convex shaped having a double-curvature extending between the short sides (13) and the long sides (14).

4. A self-adhesive balancing weight (10) for balancing a wheel of a vehicle comprising
- a bottom surface (12) to be attached to the rim of the wheel, opposed thereto a top surface (11),
- two long sides (14) opposing each other, between the top surface (11) and the bottom surface (12),
- two short sides (13) opposing each other, between the long sides (14) and arranged between the top surface (11) and the bottom surface (12),
**characterized in that**
the bottom surface (12) is convex shaped having a double-curvature extending between the short sides (13) and the long sides (14).

5. Balancing weight according to claim 4,
**characterized in that**
the short sides (13) having an angle of less than 90° to the bottom surface (12), and an angle of more than 90° to the top surface (11), and
the short sides (13) are convex-shaped from one long side (14) to the other long side (14).

6. Balancing weight according to claim 4 or 5,
**characterized in that**
the long sides (14) are under an angle of less than 90° to the bottom surface (12) and under an angle of more than 90° to the top surface (11).

7. Balancing weight according to any one of the previous claims,
**characterized in that**
an adhesive tape is at the bottom surface (12) of the balancing weight (10).

8. Chain of balancing weights comprising a plurality of balancing weights (10) according to any one of the previous claims, attached to an adhesive tape.

## Patentansprüche

1. Selbstklebendes Auswuchtgewicht (10) zum Auswuchten eines Rades eines Fahrzeugs, umfassend
- eine Unterseite (12), die an der Felge des Rades anzubringen ist, gegenüberliegend dazu eine Oberseite (11),
- zwei einander gegenüberliegende lange Seiten (14) zwischen der Oberseite (11) und der Unterseite (12),
- zwei einander gegenüberliegende kurze Seiten (13) zwischen den langen Seiten (14) und zwischen der Oberseite (11) und der Unterseite (12),
**dadurch gekennzeichnet, dass**
das Auswuchtgewicht (10) ein Bogensegment ist mit einer konvexen Unterseite (12), die sich zwischen den kurzen Seiten (13) erstreckt, und
die kurzen Seiten (13) einen Winkel von weniger als 90° zur Unterseite (12), und einen Winkel von mehr als 90° zur Oberseite (11) haben, und
die kurzen Seiten (13) von einer langen Seite (14) zur anderen langen Seite (14) konvex geformt sind.

2. Auswuchtgewicht nach Anspruch 1,
**dadurch gekennzeichnet, dass**
die langen Seiten (14) unter einem Winkel von weniger als 90° zur Unterseite (12) und unter einem Winkel von mehr als 90° zur Oberseite (11) stehen.

3. Auswuchtgewicht nach Anspruch 1 oder 2,
**dadurch gekennzeichnet, dass**
die Unterseite (12) konvex geformt ist und eine Doppelkrümmung aufweist, die sich zwischen den kurzen Seiten (13) und den langen Seiten (14) erstreckt.

4. Selbstklebendes Auswuchtgewicht (10) zum Auswuchten eines Rades eines Fahrzeugs, umfassend
- eine Unterseite (12), die an der Felge des Rades anzubringen ist, gegenüberliegend dazu eine Oberseite (11),
- zwei einander gegenüberliegende lange Seiten (14) zwischen der Oberseite (11) und der Unterseite (12),
- zwei einander gegenüberliegende kurze Seiten (13), welche zwischen den langen Seiten (14) und zwischen der Oberseite (11) und der Unterseite (12) angeordnet sind,
**dadurch gekennzeichnet, dass**
die Unterseite (12) konvex geformt ist und eine Doppelkrümmung aufweist, die sich zwischen den kurzen Seiten (13) und den langen Seiten (14) erstreckt.

5. Auswuchtgewicht nach Anspruch 4,
**dadurch gekennzeichnet, dass**
die kurzen Seiten (13) einen Winkel von weniger als 90° zur Unterseite (12) und einen Winkel von mehr als 90° zur Oberseite (11) aufweisen, und die kurze Seiten (13) von einer langen Seite (14) zu der anderen langen Seite (14) konvex geformt sind.

6. Auswuchtgewicht nach Anspruch 4 oder 5,
**dadurch gekennzeichnet, dass**
die langen Seiten (14) unter einem Winkel von weniger als 90° zur Unterseite (12) und unter einem Winkel von mehr als 90° zur Oberseite (11) stehen.

7. Auswuchtgewicht nach einem der vorhergehenden Ansprüche,
**dadurch gekennzeichnet, dass**
sich ein Klebeband an der Unterseite (12) des Auswuchtgewichts (10) befindet.

8. Kette von Auswuchtgewichten, umfassend eine Vielzahl von Auswuchtgewichten (10) nach einem der vorhergehenden Ansprüche, welche an einem Klebeband befestigt sind.

## Revendications

1. Poids d'équilibrage autoadhésif (10) pour équilibrer une roue d'un véhicule, comprenant
- une surface inférieure (12) à attacher à la jante de la roue, une surface supérieure (11) étant opposée à celle-ci,
- deux côtés longs (14) s'opposant l'un à l'autre, entre la surface supérieure (11) et la surface inférieure (12),
- deux côtés courts (13) s'opposant l'un à l'autre, entre les côtés longs (14) et entre la surface supérieure (11) et la surface inférieure (12),
**caractérisé en ce que**
le poids d'équilibrage (10) est un segment d'arc ayant une surface inférieure convexe (12) s'étendant entre les côtés courts (13), et
les côtés courts (13) formant un angle de moins de 90° avec la surface inférieure (12), et un angle de plus de 90° avec la surface supérieure (11), et
les côtés courts (13) sont de forme convexe d'un côté long (14) à l'autre côté long (14).

2. Poids d'équilibrage selon la revendication 1,
**caractérisé en ce que**
les côtés longs (14) se présentent sous un angle de moins de 90° par rapport à la surface inférieure (12) et sous un angle de plus de 90° par rapport à la surface supérieure (11).

3. Poids d'équilibrage selon la revendication 1 ou 2,
**caractérisé en ce que**
la surface inférieure (12) est de forme convexe ayant une double courbure s'étendant entre les côtés courts (13) et les côtés longs (14).

4. Poids d'équilibrage autoadhésif (10) pour équilibrer une roue d'un véhicule, comprenant
- une surface inférieure (12) à attacher à la jante de la roue, une surface supérieure (11) étant opposée à celle-ci,
- deux côtés longs (14) s'opposant l'un à l'autre, entre la surface supérieure (11) et la surface inférieure (12),
- deux côtés courts (13) s'opposant l'un à l'autre, entre les côtés longs (14) et agencés entre la surface supérieure (11) et la surface inférieure (12),
**caractérisé en ce que**
la surface inférieure (12) est de forme convexe ayant une double courbure s'étendant entre
les côtés courts (13) et les côtés longs (14).

5. Poids d'équilibrage selon la revendication 4,
**caractérisé en ce que**
les côtés courts (13) forment un angle de moins de 90° avec la surface inférieure (12), et un angle de plus de 90° avec la surface supérieure (11), et
les côtés courts (13) sont de forme convexe d'un côté long (14) à l'autre côté long (14).

6. Poids d'équilibrage selon la revendication 4 ou 5,
**caractérisé en ce que**
les côtés longs (14) se présentent sous un angle de moins de 90° par rapport à la surface inférieure (12) et sous un angle de plus de 90° par rapport à la surface supérieure (11).

7. Poids d'équilibrage selon l'une quelconque des revendications précédentes,
**caractérisé en ce que**
une bande adhésive est au niveau de la surface inférieure (12) du poids d'équilibrage (10).

8. Chaîne de poids d'équilibrage comprenant une pluralité de poids d'équilibrage (10) selon l'une quelconque des revendications précédentes, attachés à une bande adhésive.
